Europäisches Patentamt

European Patent Office

Office européen des brevets

(19)

(11) Publication number: **0 451 491 A2**

# EUROPEAN PATENT APPLICATION

(12)

(21) Application number: 91103093.0

(22) Date of filing: 01.03.91

(51) Int. Cl.⁵: **A23P 1/08**

(30) Priority: 09.04.90 GB 9007993

(43) Date of publication of application:
16.10.91 Bulletin 91/42

(84) Designated Contracting States:
AT BE CH DE DK ES FR GB GR IT LI LU NL SE

(71) Applicant: SOCIETE DES PRODUITS NESTLE
S.A.
Case postale 353
CH-1800 Vevey(CH)

(72) Inventor: Davis, David John Lawrence
1, rue de la Fontaine, Brocard
F-60000 Beauvais(FR)
Inventor: Gibbs, Vernon
68, Hadley Gardens, Norwood Green
Southall, Middlesex(GB)

(54) Barrier coating for food products.

(57) A barrier coating comprising a mixture of an edible fat and a milk protein in the form of a membrane.

The present invention relates to an edible moisture barrier coating which reduces the migration of water between the components in a heterogeneous food system.

In heterogeneous food products it is difficult to prevent moisture migration from the high water content components to the lower water content components and this causes the latter to become undesirably soft and moist. Edible coatings are known to retard this moisture transfer within foods and such coatings are often emulsions prepared from various protein/fat combinations. For example, WO 86/00501 describes a pre-formed film of fat and protein, which may be made by a layer method or an emulsion method, but the only protein mentioned is albumen. We have found, however, that in chilled desserts comprising moist ingredients with a dry or crisp topping which are to be eaten hot, albumen coagulates and makes a barrier which is not compatible with the product. On the other hand, if fat only is used it melts in the oven during reheating and produces puddles of liquid fat which is visually and organoleptically unpleasant.

We have found, surprisingly, that using a barrier coating which comprises fat, and a milk protein in the form of a membrane, the coating softens on heating without the separation of free fat and is compatible with the dessert product both visually and organoleptically and the product has an improved shelf life, especially during chill storage at temperatures from 0° C and 15° C.

Accordingly, the present invention provides a barrier coating comprising a mixture of an edible fat and a milk protein in the form of a membrane.

The barrier coating is conveniently in the form of a continuous uniform film. The thickness of the barrier coating is usually from 0.5 to 5 mm and preferably from 1 to 3 mm.

The quantities of fat and milk protein may vary widely and they may be present in a ratio of from 3:10 to 10:1 by weight, preferably from 4:6 to 6:4 by weight.

The fat is preferably cocoa butter but cocoa substitutes may also be used. The milk protein may be used in the form of milk powder which may be formed by roller drying or spray drying and optionally preground.

If desired, sugars may be present in the barrier coating. The preferred sugar is sucrose but other sugars such as glucose, fructose, maltose or lactose may be used. The amount of sugar used may be up to 60% and preferably from 20 to 50% by weight based on the weight of the coating. When the fat is cocoa butter and the sugar is sucrose, chocolate is a suitable barrier coating. The chocolate may be plain chocolate, milk chocolate or white chocolate. The barrier coating may optionally contain other ingredients e.g. dry flavours such as vanilla or emulsifying agents such as polyglycerol ricinoleate or lecithin.

The barrier coating may be prepared by mixing the ingredients, and refining to reduce the particle size. After particle size reduction, the ingredients may be mixed at a temperature which may conveniently be from 40° to 85° C for a duration of from 2 hours to several days e.g. from 45° to 65° C for from 2 to 20 hours. When the coating is chocolate, the particle size is reduced to smaller than 30 μm by refiners which comprise cylinders adjusted to progressively smaller clearance and then conched i.e. kneaded and aerated over a period varying from a few hours to a few days at 50° to 70° C for milk chocolate, 60 to 85° C for plain chocolate and 50° to 65° C for white chocolate.

The present invention also provides a process for coating a food substrate to be formed into a heterogeneous product with a food component of higher water activity which comprises applying a dispersion of the above described edible moisture barrier coating onto the food substrate in an amount effective to retard moisture migrating from the food component with the higher water activity into the food substrate when formed into the heterogeneous food product, especially during chill storage. When the coating is chocolate, the chocolate is melted to form the dispersion.

The amount of coating on the food substrate is usually within the range of from 10% to 180% and preferably from 15% to 150% by weight based on the weight of the food substrate on a dry weight basis.

The coating may be applied onto the food substrate by various conventional techniques apparent to those skilled in the art e.g. brushing, pouring, spreading, dipping or spraying. The coating may be applied, if desired, by heat-set or cold-set methods.

In a heat-set method, the coating may be applied at a temperature from, for instance, 30° to 50° C and preferably from 35° to 45° C conveniently in a fluid form. After coating, the coated food substrate is cooled, for instance, in a blast chiller at a temperature from 3° to 9° C for final setting of the coating, prior to the addition of the other food component which may be a separate topping layer.

In a cold-set method, the coating may be applied at a temperature from 0° C to 10° C, preferably from 4° C to 8° C conveniently cast in the shape of the container. Alternatively, the coating may be applied in a grated or shredded form at a temperature from 0° to 15° C over the surface of the food substrate heated to a temperature from 30° to 60° C, preferably from 35° to 55° C such that the coating melts on contact thus forming a continuous membrane over the surface of the food substrate right to the sides of the container. After coating, the coated food substrate is cooled, for instance, in a blast chiller at a temperature from 3° to 9°C for final setting of the coating, prior to the addition of the other food component e.g. a separate topping layer.

The coating of this invention may be applied to a variety of sweet or savoury substrates e.g. chilled dessert products comprising moist ingredients to which will be added a dry or crisp topping which are to be microwave or oven heated by the consumer and eaten hot such as fruit crumbles, or cakes, pizzas, pastas or vegetables. The coating may also be applied to a dry or crisp topping such as nuts or croutons to be added to salads to be later chilled.

The present invention further provides a method for preparing a heterogeneous food product containing components of different water activities which comprises applying a dispersion of the above described edible moisture barrier coating onto the food component with the lower water activity and then forming the two food components into the heterogeneous food product wherein the amount of coating is effective to retard moisture migration from the food component with the higher water activity into the coated food component, especially during chill storage. The coating may be melted to form the dispersion. Advantageously the edible moisture barrier coating forms a continuous layer which completely separates the food component having the lower water activity from the food component having the lower water activity.

The heterogeneous food product may be formed, for example, by incorporating one component into the other or by coating one component onto the other component, or by separating one layered component from another layered component by the application of a third layer comprising the above described edible moisture barrier coating.

The following Examples further illustrate the present invention. Parts and percentages are given by weight.

Example 1

125 g of a puree of a sweetened apples was filled into the bottom of a plastic ovenable tray. 50 g of a melted dispersion of full cream milk powder and sugar in cocoa butter, at a temperature of 35°C was poured over the whole surface of the fruit layer to form a complete layer. The tray containing the fruit with the moisture barrier coating was then held in a chiller at 6°C to set the coating. A crumb topping with an average moisture content of 2% was sprinkled on top of the set water barrier coating, to form a complete layer of 100 g. The trays were then sealed with a clear plastic or foil laminated film and held in chill storage at a temperature of 6°C for 28 days. During this storage time in chill, the crumb topping remained relatively dry and crunchy.

Example 2

A similar procedure to that described in Example 1 was followed except that the barrier coating was applied at a temperature of 45°C instead of 35°C. During chill storage between 2°C and 10°C the crumb topping remained relatively dry and crunchy.

**Claims**

1.  A barrier coating comprising a mixture of an edible fat and a milk protein in the form of a membrane.

2.  A barrier coating according to claim 1 wherein the thickness is from 0.5 to 5 mm.

3.  A barrier coating according to claim 1 wherein the edible fat and milk protein are present in a ratio of from 3:10 to 10:1 by weight.

4.  A barrier coating according to claim 1 wherein the edible fat is cocoa butter.

5.  A barrier coating according to claim 1 in which sugar is also present.

6.  A barrier coating according to claim 5 in which the sugar is sucrose.

7.  A barrier coating according to claim 1 which is made of plain chocolate, milk chocolate or white chocolate.

8.  A process of preparing an edible moisture barrier coating which comprises mixing the ingredients according to claim 1 and refining to reduce the particle size followed by remixing at a temperature from 40 to 85°C for a period from 2 hours to several days.

9.  A process for coating a food substrate to be formed into a heterogeneous product with a food component of higher water activity which comprises applying a dispersion of the edible moisture barrier coating claimed in claim 1 onto the food substrate in an amount effective to retard moisture migrating from the food component with the higher water activity into the food substrate when formed into the heterogeneous food product.

10. A process according to claim 9 wherein the amount of coating on the food substrate is from 10% to 180% by weight based on the weight of the food substrate on a dry weight basis.

11. A process according to claim 9 wherein the coating is applied by a heat-set or cold-set method.

12. A method for preparing a heterogeneous food product containing components of different water activities which comprises applying a dispersion of the edible moisture barrier coating claimed in claim 1 onto the food component with the lower water activity and then forming the two food components into the heterogenous food product wherein the amount of coating is effective to retard moisture migration from the food component with the higher water activity into the coated food component.

13. A method according to claim 12 wherein the edible moisture barrier coating forms a continuous layer which completely separates the food component having the higher water activity from the food component having the lower water activity.

14. A coated food substrate whenever prepared by a process according to any of claims 9 to 11.

15. A heterogeneous food product whenever prepared by the process of claim 12 or claim 13.